# FASCICULE DE BREVET EUROPEEN

(11) **EP 0 819 223 B1**
(45) Date de publication et mention de la délivrance du brevet: **28.07.1999**
(21) Numéro de dépôt: 96912068.2
(22) Date de dépôt: 04.04.1996
(51) Int. Cl.: F16F 9/18, F16F 9/50

(54) **DISPOSITIF AMORTISSEUR DE SUSPENSION, A EFFET AUTO-PROGRAMME, NOTAMMENT POUR VEHICULE AUTOMOBILE**
SELBSTANPASSENDER AUFHÄNGUNGSDÄMPFER, INBESONDERE FÜR KRAFTFAHRZEUGE
SELF-PROGRAMMED SUSPENSION SHOCK-ABSORBER DEVICE, PARTICULARLY FOR MOTOR VEHICLES

(30) Priorité: 05.04.1995 FR 9504221
(43) Date de publication de la demande: 21.01.1998
(73) Titulaire: Liege, Marcel, 79230 Prahecq (FR)
(72) Inventeur: Liege, Marcel, 79230 Prahecq (FR)
(74) Mandataire: Thébault, Jean-Louis
(86) Numéro de dépôt international: FR9600516
(87) Numéro de publication internationale: WO9631709

(56) Documents cités:
- WO-A-86/00675
- DE-A- 3 823 043
- FR-A- 1 300 067
- US-A- 2 640 693
- US-A- 5 096 026

## Description

La présente invention a pour objet un dispositif amortisseur de suspension, à effet auto-programmé, notamment pour véhicule automobile.

On connaît la demande de brevet FR-A-1 300 067 au nom du présent demandeur qui décrit un amortisseur à effet réflexe pour véhicules, du type hydraulique.

Le dispositif décrit dans cette demande comprend un corps divisé en trois chambres indépendantes, remplies de fluide liquide hydraulique :
- une première chambre dite principale dans laquelle coulisse un piston relié par une tige à une rotule solidaire de l'élément mobile dont le mouvement doit être amorti,
- une deuxième chambre dite de compensation à la montée, et
- une troisième chambre dite de compensation à la descente.

La chambre principale est reliée aux deuxième et troisième chambres par des canalisations et les retours de liquide s'effectuent à travers des soupapes dont l'ouverture est tarée avec un effort prédéterminé constant.

Lors des déplacements brusques de l'élément à amortir, l'action d'absorption doit être rapide mais l'action de détente doit être maîtrisée suivant une courbe qui n'est pas linéaire. Il a été jugé utile d'introduire une certaine progressivité de l'ouverture des soupapes de décharge, proportionnellement à l'effort de détente nécessaire, afin de suivre au mieux la courbe de détente souhaitée.

Plus particulièrement le but de l'invention est de proposer un dispositif avec un amortissement à effet autoprogrammé, à double effet, proportionnel.

La conception de ce dispositif est telle que sa réalisation industrielle est simple, ce qui accroît sa fiabilité car le nombre de pièces mises en oeuvre reste limité.

A cet effet, le dispositif amortisseur de suspension, à effet auto-programmé, notamment pour un véhicule comprenant un corps muni d'une chambre centrale avec un piston monté coulissant dans cette chambre, le corps et le piston étant prévus pour être fixés l'un sur un point fixe du véhicule et l'autre sur l'élément dont le mouvement doit être contrôlé, ainsi que deux chambres de compensation à la descente ou à la montée du piston, reliées entre elles par des canalisations et équipées chacune d'une platine de décharge fixe et d'un tiroir mobile en translation, chaque platine de décharge fixe comprenant une soupape de décharge. Un tel dispositif est connu du document FR-A-1 300 067. L'invention est caractérisé par le fait que chaque soupape de décharge est reliée au tiroir mobile correspondant par un élément élastique de rappel.

Plus particulièrement, l'élément élastique de rappel est un ressort de raideur modulable par l'importance du déplacement.

Selon un perfectionnement, la platine de décharge comprend un ajutage complémentaire monté parallèlement à la soupape de décharge.

Il est en outre prévu une chambre de compensation anticavitation.

Les canalisations comprennent des clapets anti-retour disposés à la sortie de ces canalisations.

Ces canalisations sont piquées immédiatement au-dessus ou au-dessous du tiroir correspondant, en sorte que ledit tiroir puisse obturer la canalisation lors de son déplacement en translation.

L'invention est décrite ci-après selon un mode de réalisation particulier, non limitatif, en regard des dessins annexés qui représentent :
- figure 1, une vue en coupe d'un dispositif de l'art antérieur,
- figure 2, une vue en coupe schématique d'un dispositif amortisseur selon l'invention, en position neutre,
- figure 3A, une vue identique à celle de la figure 2, en position d'amortissement haut, suite à une montée,
- figure 3B, une vue identique à celle de la figure 2, en position de retour d'amortissement haut, suite à une montée,
- figure 4A, une vue identique à celle de la figure 2, en position d'amortissement bas, suite à une descente, et
- figure 4B, une vue identique à celle de la figure 2, en position de retour d'amortissement bas, suite à une descente.

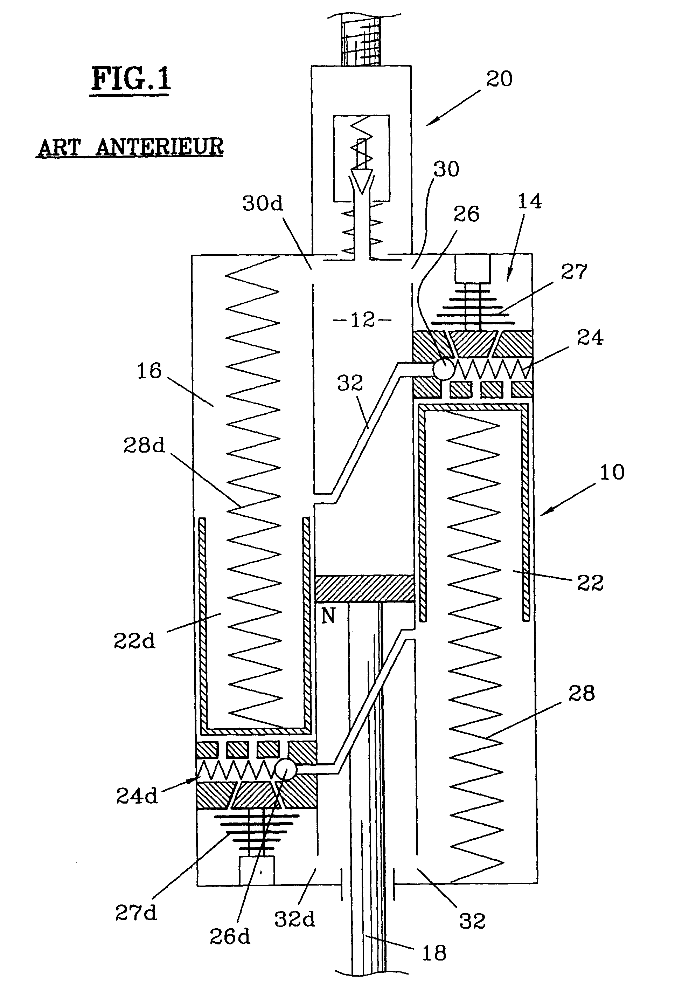

Sur la figure 1, illustrant un mode de réalisation de l'art antérieur, on a représenté un corps 10, trois chambres 12, 14 et 16, respectivement centrale, de compensation à la montée et de compensation à la descente.

Un piston 18 est monté coulissant dans la chambre centrale.

La chambre centrale est équipée d'une chambre de compensation 20, anticavitation.

La chambre 14 de compensation à la montée comprend un tiroir 22, mobile en translation dans ladite chambre, entre deux positions, l'une de rappel à proximité immédiate d'une soupape de décharge 24 équipée d'un anti-retour à bille 26 et l'autre de travail, écartée de ladite soupape de décharge.

Le soupape de décharge comprend un ressort 27, taré et de raideur constante.

Un élément élastique de rappel 28, à raideur constante, est disposé entre le tiroir et l'une des parois de la chambre, en sorte de plaquer le tiroir contre le soupape de décharge, en position stable du dispositif amortisseur.

Le même agencement est disposé de façon symétrique pour la chambre de compensation à la descente. Les références sont identiques mais suivie d'un "d".

Les chambres de compensation à la montée et à la descente comprennent chacune des trous 30, 32 et 30d, 32d, de passage de liquide pour communication avec la chambre centrale, respectivement en partie haute et en partie basse.

De plus, deux canalisations 32 et 34 relient les chambres de compensation à la montée et à la descente entre elles. Ces canalisations sont symétriques, elles sont piquées immédiatement en dessous des tiroirs et débouchent au droit de chacune des billes des anti-retour 26, 26d.

Le fonctionnement est décrit ci-après.

Lorsque le piston remonte, ce qui correspond à un obstacle en saillie, le liquide refoulé de la chambre centrale passe dans la chambre de compensation à la descente 16, circule dans la canalisation 32 et passe à travers l'anti-retour 26, qui peut s'ouvrir dans ce sens de circulation, pour pousser le tiroir 22 de la chambre de compensation à la montée 14, à l'encontre du ressort de rappel 28, qui se trouve comprimé. Au passage, le tiroir obture la canalisation 34, ce qui impose le passage du fluide de la chambre de compensation 14 dans la chambre centrale par le trou 32.

Dès que la détente se produit, le ressort de rappel 28 repousse le tiroir 22 et l'anti-retour 26 est fermé. Le fluide sous pression passe donc à travers la soupape de décharge 24 et rejoint la chambre centrale 12. Le passage du fluide est donc freiné par la soupape avec un effort constant lié à la raideur du ressort 27 de la soupape de décharge.

Dans le cas où l'obstacle est en creux plutôt qu'en saillie, le fonctionnement est inversé mais parfaitement symétrique.

Bien entendu, l'homme de l'art est à même d'adapter la viscosité du fluide liquide et les dimensions des différents organes, en fonction des besoins.

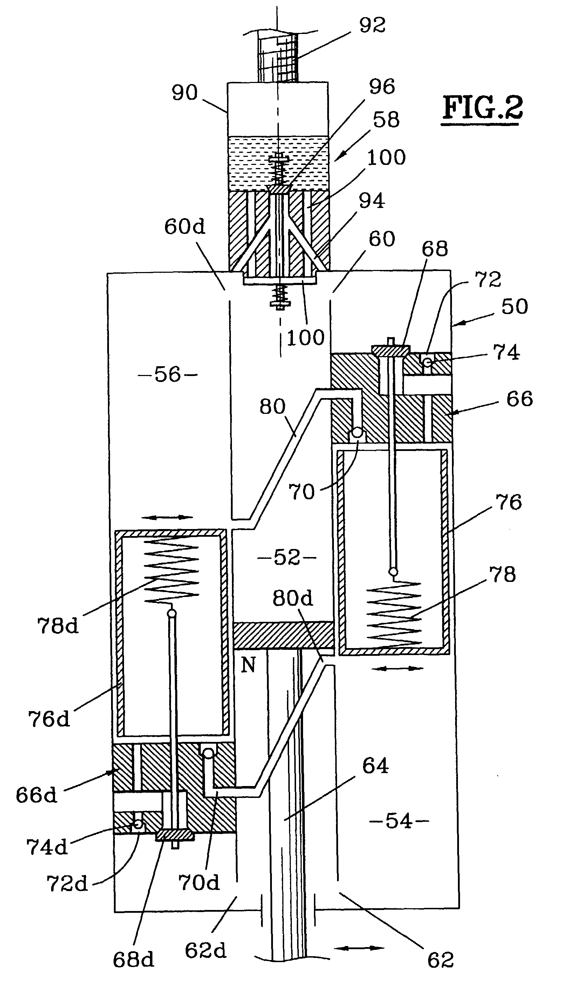

En ce qui concerne la présente invention, on se reporte utilement aux figures 2, 3A,3B et 4A,4B.

Sur la figure 2, on a représenté le dispositif à l'état stable d'attente, ce dispositif comprenant un corps 50, une chambre centrale 52, une chambre de compensation 54 à la montée et une chambre de compensation 56 à la descente.

Selon le mode de réalisation préférentiel représenté, ces chambres sont agencées avec les chambres de compensation de part et d'autre de la chambre centrale.

Le dispositif est parfaitement symétrique suivant une diagonale du rectangle représentant la coupe du corps, de préférence cylindrique. Aussi les références sont identiques pour les éléments identiques avec un "d" ajouté pour les distinguer.

En partie supérieure de la chambre centrale, il est prévu une chambre de compensation 58, anti-cavitation.

La chambre centrale 52 comprend deux trous de communication haut 60, 60d et bas 62, 62d avec les chambres de compensation 54 et 56 respectivement.

Dans la chambre centrale 52, il est introduit un piston 64, mobile en translation, dont l'extrémité, extérieure au corps 50, est reliée à l'élément à amortir, dans le cas présent un bras support de roue d'un véhicule.

Chaque chambre de compensation est équipée d'une platine de décharge 66 et 66d qui comprend une soupape de décharge 68, 68d, un clapet anti-retour 70, 70d et un ajutage 72, 72d avec un clapet anti-retour 74, 74d.

Un tiroir 76, 76d est disposé au droit de chaque platine et peut coulisser dans la chambre entre une première position accolée à la platine correspondante et une autre position éloignée de ladite platine.

Chaque tiroir est relié par un élément élastique de rappel 78, 78d, à la soupape de décharge correspondante 68, 68d.

Deux canalisations 80, 80d relient les chambres de compensation à la montée et à la descente 54 et 56. Ces canalisations sont symétriques et prennent naissance par un piquage immédiatement l'une 80 au-dessus et l'autre 80d au-dessous des tiroirs respectifs 76d et 76 pour déboucher dans les platines associées 66 et 66d, au droit des clapets anti-retour 70 et 70d.

Les moyens de compensation 58, anti-cavitation, comprennent un réservoir tampon 90, solidaire du corps 50 et du châssis du véhicule par un tirant 92. Ce réservoir est obturé par une embase comportant un circuit d'entrée 94 avec un clapet 96 de fermeture et un circuit de sortie 100 avec un clapet 100 de fermeture.

Sur cette figure 2, on a indiqué la position neutre avec une référence "N".

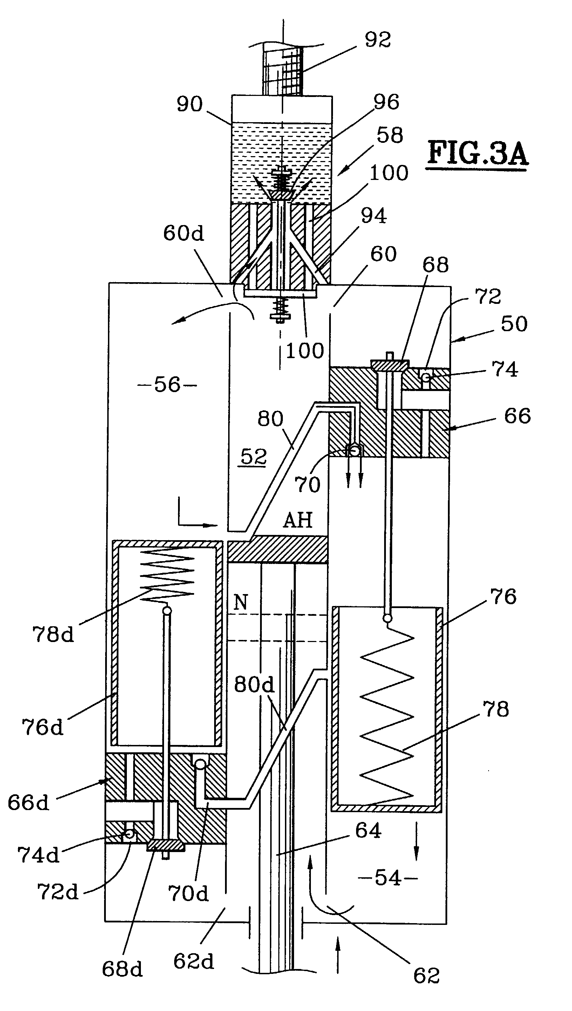

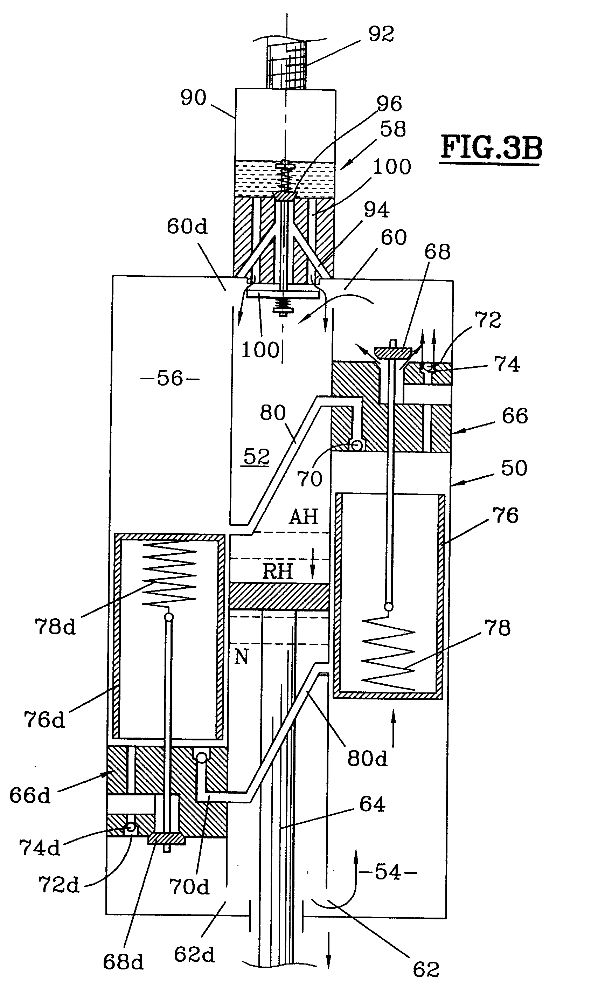

Le fonctionnement est détaillé ci-après en regard des figures 3A et 3B, pour les mouvements consécutifs au franchissement d'un obstacle en saillie provoquant la montée du piston 64.

La position haute maximale du piston référencée "AH", conduit au déplacement du tiroir 76. En effet, le liquide est refoulé de la chambre centrale 52 vers la chambre de compensation 56 à la descente pour passer dans la canalisation 80 et sortir entre la platine de décharge 66 et le tiroir 76, ce qui a pour effet de déplacer ledit tiroir dans la position représentée sur cette figure 3A, position dans laquelle la canalisation 80d est obturée par le tiroir 76 qui s'est déplacé devant.

La circulation du fluide liquide est indiquée par les différentes flèches. Le fluide liquide de la chambre de compensation à la montée 54 est expulsé par le trou 62 dans la chambre centrale 52.

On remarque également que l'élément élastique de rappel est tendu puisqu'il travaille à la traction et qu'il a tendance à ramener le tiroir dans sa position initiale.

De ce fait, la soupape 68 se trouve plaquée avec un effort F1 important supérieur à F0 en position neutre.

Le tiroir 76d reste immobile.

Quant à la chambre de compensation 56, si le déplacement du piston a été très violent, du fluide liquide est évacué de la chambre centrale vers cette chambre de compensation, à travers le circuit d'entrée 94 et par ouverture du clapet 96.

Lorsque le piston redescend, c'est à dire la position "RH", le tiroir reprend sa place mais son mouvement est freiné car le fluide liquide doit passer à travers l'ajutage 72, ce qui maintient la pression à des valeurs élevées et provoque l'ouverture de la soupape 68. On remarque que l'effort F2 est compris entre F0 et F1 et qu'il varie, en diminuant, au fur et à mesure que le tiroir se rapproche de la platine de décharge.

Il y a donc une certaine progressivité dans le tarage de la soupape de décharge qui suit, avec précision et toujours avec le même profil de courbe, les mouvements du tiroir.

C'est là tout l'intérêt du dispositif selon la présente invention.

Lors des mouvements de faible amplitude, l'ajutage seul est sollicité et permet un bon effet d'amortissement.

Par contre, dès que l'amplitude augmente, l'effet de progressivité généré par le dispositif selon l'invention se fait sentir.

La description qui vient d'être faite pour un déplacement consécutif à un obstacle en saillie est applicable pour un déplacement consécutif au franchissement d'un obstacle en creux provoquant la descente du piston.

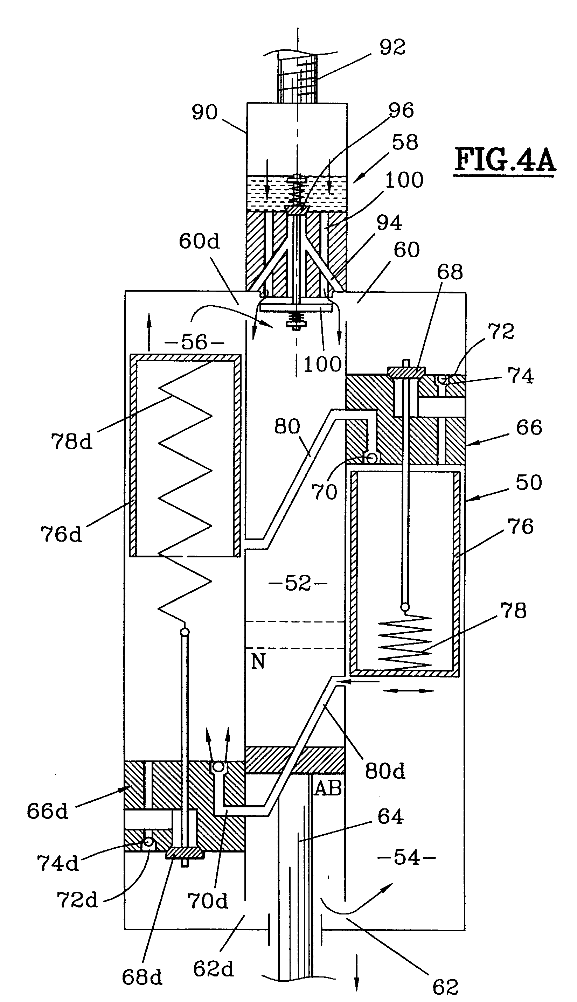

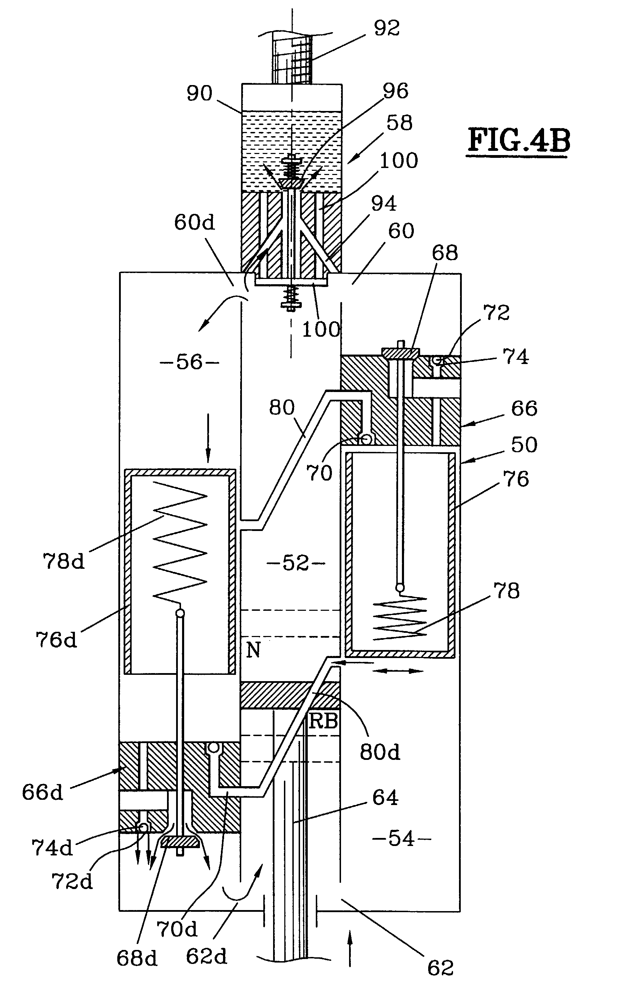

La position de descente maximale est référencée "AB" sur la figure 4A et la position de retour est référencée "RB" sur la figure 4B.

Les différentes circulations du fluide liquide sont indiquées par des flèches.

Avec ce système, la sensibilité et le confort de la suspension sont respectés dans l'action, qui n'est pas entravée dans son mouvement. Lors de la réaction, le mouvement est également maîtrisé par le dispositif selon l'invention.

## Revendications

1. Dispositif amortisseur de suspension, a effet auto-programmé, notamment pour un véhicule comprenant un corps (50) muni d'une chambre centrale (52) avec un piston (64) monté coulissant dans cette chambre, le corps et le piston étant prévus pour être fixé l'un sur un point fixe du véhicule et l'autre sur l'élément dont le mouvement doit être contrôlé, ainsi que deux chambres de compensation à la descente (56) ou à la montée du piston (54), reliées entre elles par des canalisations (80, 80d) et équipées chacune d'une platine de décharge (66, 66d) fixe et d'un tiroir (76, 76d) mobile en translation, chaque platine de décharge fixe comprenant une soupape de décharge caractérisé en ce que chaque soupape de décharge (68, 68d) est reliée au tiroir mobile correspondant (76, 76d) par un élément élastique de rappel (78, 78d).

2. Dispositif amortisseur de suspension, à effet auto-programmé, selon la revendication 1, caractérisé en ce que l'élément élastique de rappel (78, 78d) est un ressort de raideur modulable par l'importance du déplacement.

3. Dispositif amortisseur de suspension, à effet auto-programmé, selon la revendication 1 ou 2, caractérisé en ce que la platine de décharge (66, 66d) comprend un ajutage complémentaire (72, 72d) monté parallèlement à la soupape de décharge (68, 68d).

4. Dispositif amortisseur de suspension, à effet auto-programmé, selon l'une quelconque des revendications précédentes, caractérisé en ce qu'il comprend une chambre de compensation anticavitation (58).

5. Dispositif amortisseur de suspension, à effet auto-programmé, selon l'une quelconque des revendications précédentes, caractérisé en ce que les canalisations (80, 80d) comprennent des clapets anti-retour (70, 70d) disposés à la sortie de ces canalisations.

6. Dispositif amortisseur de suspension, à effet auto-programmé, selon l'une quelconque des revendications précédentes, caractérisé en ce les canalisations (80, 80d) sont piquées immédiatement au-dessus ou au-dessous du tiroir correspondant (66, 66d) en sorte que ledit tiroir puisse obturer la canalisation lors de son déplacement en translation.

## Patentansprüche

1. Aufhängungsdämpfer mit Selbstanpassung, insbesondere für ein Fahrzeug, mit einem Körper (50), der versehen ist mit einer Mittelkammer (52), in der ein Kolben (64) gleitend angebracht ist, wobei der Körper und der Kolben so vorgesehen sind, daß einer von ihnen an einem festen Punkt des Fahrzeugs und der andere an dem Element, dessen Bewegung gesteuert werden soll, befestigt ist, sowie mit zwei Kammern zur Kompensation des Einfahrens (56) oder des Ausfahrens (54) des Kolbens, die untereinander über Leitungen (80, 80d) verbunden sind und jeweils mit einer feststehenden Entlastungsplatte (66, 66d) und mit einem translatorisch beweglichen Schieber (76, 76d) ausgerüstet sind, wobei jede feststehende Entlastungsplatte ein Entlastungsventil enthält, dadurch gekennzeichnet, daß jedes Entlastungsventil (68, 68d) mit dem entsprechenden beweglichen Schieber (76, 76d) über ein elastisches Rückstellelement (78, 78d) verbunden ist.

2. Aufhängungsdämpfer mit Selbstanpassung nach Anspruch 1, dadurch gekennzeichnet, daß das elastische Rückstellelement (78, 78d) eine Feder ist, deren Steifigkeit durch die Größe der Auslenkung modulierbar ist.

3. Aufhängungsdämpfer mit Selbstanpassung nach Anspruch 1 oder 2, dadurch gekennzeichnet, daß die Entlastungsplatte (66, 66d) einen zusätzlichen Anschluß (72, 72d) enthält, der parallel zum Entlastungsventil (68, 68d) angebracht ist.

4. Aufhängungsdämpfer mit Selbstanpassung nach einem der vorangehenden Ansprüche, dadurch gekennzeichnet, daß sie eine Antikavitations-Kompensationskammer (58) enthält.

5. Aufhängungsdämpfer mit Selbstanpassung nach einem der vorangehenden Ansprüche, dadurch gekennzeichnet, daß die Leitungen (80, 80d) Rückschlagventile (70, 70d) enthalten, die am Ausgang dieser Leitungen angeordnet sind.

6. Aufhängungsdämpfer mit Selbstanpassung nach einem der vorangehenden Ansprüche, dadurch gekennzeichnet, daß die Leitungen (80, 80d) unmittelbar oberhalb oder unterhalb des entsprechenden Schiebers (66, 66d) einmünden, so daß der Schieber die Leitung bei seiner translatorischen Bewegung verschließen kann.

## Claims

1. Suspension damping device, with auto-programmed effect, notably for a vehicle, comprising a body (50) provided with a central chamber (52) with a piston (64) slidably mounted in this chamber, the body and piston being designed to be fixed one to a fixed point on the vehicle and the other to the element whose movement is to be controlled, as well as two compensation chambers for the lowering (56) or raising of the piston (54), connected together by ducts (80, 80b) and each equipped with a fixed discharge plate (66, 66d) and a slide (76, 76d) which is movable in translation, each fixed discharge plate comprising a discharge valve, characterised in that each discharge valve (68, 68d) is connected to the corresponding movable slide (76, 76d) by an elastic return element (78, 78d).

2. Suspension damping device, with auto-programmed effect, according to Claim 1, characterised in that the elastic return element (78, 78d) is a spring with a stiffness which can be modulated by the magnitude of the movement.

3. Suspension damping device, with auto-programmed effect, according to Claim 1 or 2, characterised in that the discharge plate (66, 66d) comprises a complementary nozzle (72, 72d) mounted parallel to the discharge valve (68, 68d).

4. Suspension damping device, with auto-programmed effect, according to any one of the preceding claims, characterised in that it comprises an anti-cavitation compensation chamber (58).

5. Suspension damping device, with auto-programmed effect, according to any one of the preceding claims, characterised in that the ducts (80, 80b) comprise non-return valves (70, 70d) disposed at the outlet of these ducts.

6. Suspension damping device, with auto-programmed effect, according to any one of the preceding claims, characterised in that the ducts (80, 80d) are tapped immediately above or below the corresponding slide (66, 66d) so that said slide can close off the duct when it moves in translation.
